# EUROPEAN PATENT APPLICATION

(11) **EP 0 565 186 A2**
(43) Date of publication of application: **13.10.1993**
(21) Application number: 93200976.4
(22) Date of filing: 03.04.1993
(51) Int. Cl.: H05B 6/12, H05B 6/36

(54) **Induction heating device**

(30) Priority: 10.04.1992 ES 9200787; 11.03.1993 ES 9300505
(71) Applicant: BALAY, S.A., E-50016 Zaragoza (ES)
(72) Inventor: Sancho Diaz, Francisco Javier, E-50010 Zaragoza (ES); Garcia Jimenez, José Ramon, E-50010 Zaragoza (ES); Burdio Pinilla, José Miguel, E-50005 Zaragoza (ES)
(74) Representative: Ungria Lopez, Javier

(57) **Abstract**

The device forms part of what is considered as a vitro-ceramic plate, used to heat food by induction, in such a way that heat energy is generated in the ferromagnetic container itself located on the ceramic glass that covers the conductor coil itself located on the respective support of the vitro-ceramic plate in question. The cited coil, according to the invention, is formed by a rigid circular section wire, whose diameter is preferably between 1 and 13 mm., forming the coil in a spiral grooving (2) of the top surface of the support (1) with equidistant rings thereof.

The coil can also be formed of a copper plate placed upon the respective support.

## Description

### OBJECT OF THE INVENTION

The invention consists of a device for induction heating, used to cook food, in such a way that with the induction cooking plate the heat energy is generated in the ferromagnetic container itself placed above a flat coil, located under the ceramic glass on which the container is placed for cooking food.

The device that is proposed is formed by a general circular shaped support, in whose top surface a spiral grooving has been made, with a distance between rings to attain the diameter required to achieve the necessary inductance, in which a rigid wire will remain wound and likewise in the support some mortisings, preferably four, are formed, positioned orthogonally two by two, in which some ferrites are located under the winding, whose free end exceeds the diameter of the coil.

In a variation of embodiment, the coil is formed by a copper strip.

### BACKGROUND OF THE INVENTION

Everybody knows that the means conventionally used to cook food are based on generating heat by thermal conductivity, the presence of a flame or heat source being necessary, losses being produced by temperature lag.

In this case, upon the temperature upon which cooking takes place being at a high temperature, as the surface transmits the contained heat of the container, the food incrusts or sticks to the plate, making cleaning difficult, also creating bad smells due to the burning of the spilt food.

Multifilar wire flat coils are used for induction cooking. A high frequency current is made to pass along the coils with all the filaments (approximately 20) in contact with one another, or with Litz wire, in which case each filament is coated so there is no contact between them.

In this way, the problem arises of attaining the flat geometric shape of the coil, which is rather difficult.

Besides, excessive heating may take place inside the coil and the distribution of temperature on the bottom of the container is not uniform.

Coils thus formed remain with their filaments in an insulating tubular body wound between two mica plates, or else rigidity thereof is achieved by coating the filaments.

### DESCRIPTION OF THE INVENTION

The device that is described in the present specification is based on the use of a wire that is rigid, with a diameter preferably between 1 and 1.3 mm., which will form the coil, whereby less heating of said coil by passing of the current, fundamentally in the center rings, is achieved.

Said coil is formed upon a generally circular-shaped support, on whose top surface a spiral grooving has been made with the rings equidistant from one another, on which the rigid wire will remain wound.

Some mortisings for the positioning of the ferrites, preferably in the number of four, positioned orthogonally two by two, which remain under the rigid wire winding and the free end thereof exceeds the diameter of the ring, are shaped on said support.

In order for the rigid wire forming the flat coil to remain perfectly anchored to the support, the grooving made in the base support has regularly spaced some points in which the rigid wire remains laid upon having a U-shaped recess with the wings converging at the top under the groove point.

Thus, upon placing the rigid wire fit in said points, each one at a certain distance, one avoids the same from being accidentally released.

The rigid wire flat coil could be shaped with some spacers between the rings, and once it has been materialized it could be placed upon a support base.

On the other hand, the rigid wire coil can be materialized in such a way that the distribution of the rings is not equidistant, in order to try to achieve a more uniform distribution of heat.

Another variant in the rigid wire coil consists of making it so that all the rings are together placed either upon a support without grooves or between two mica plates.

The coil may consist of a strip wound in a vertical position, remaining placed on a circular support with a bottom mica plate and another top mica or Kapton plate. The thickness of the strip is between 0.25 and 0.45 mm. and its height is between 5 and 10 mm.

A set of drawings is attached hereto so that the features of the device may be more easily understood.

### BRIEF DESCRIPTION OF THE DRAWINGS

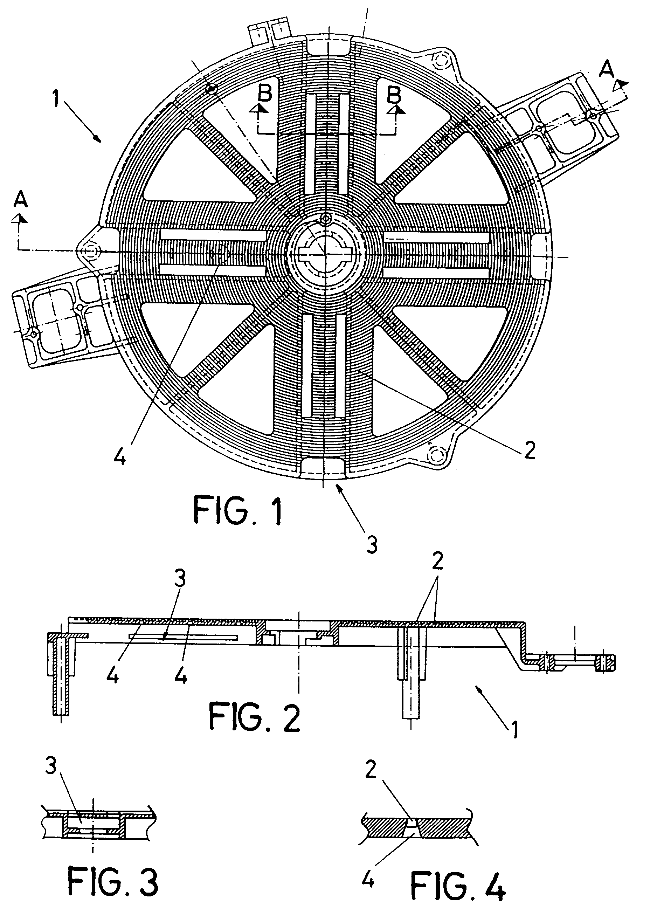

Figure 1.- It shows a plan view of the base support, showing the spiral grooving wherein the rigid wire will be wound, as well as the mortisings for positioning the ferrites.

Figure 2.- It shows a sectioned view according to the A-A axis of the previous figure, showing the equidistant grooves made in the top surface of the base support upon which the rigid wire is wound.

Figure 3.- It shows a sectioned view, according to the B-B axis of figure 1, wherein one observes the mortising for positioning the ferrite.

Figure 4.- It shows a sectioned detailed view of the fastening point of the rigid wire.

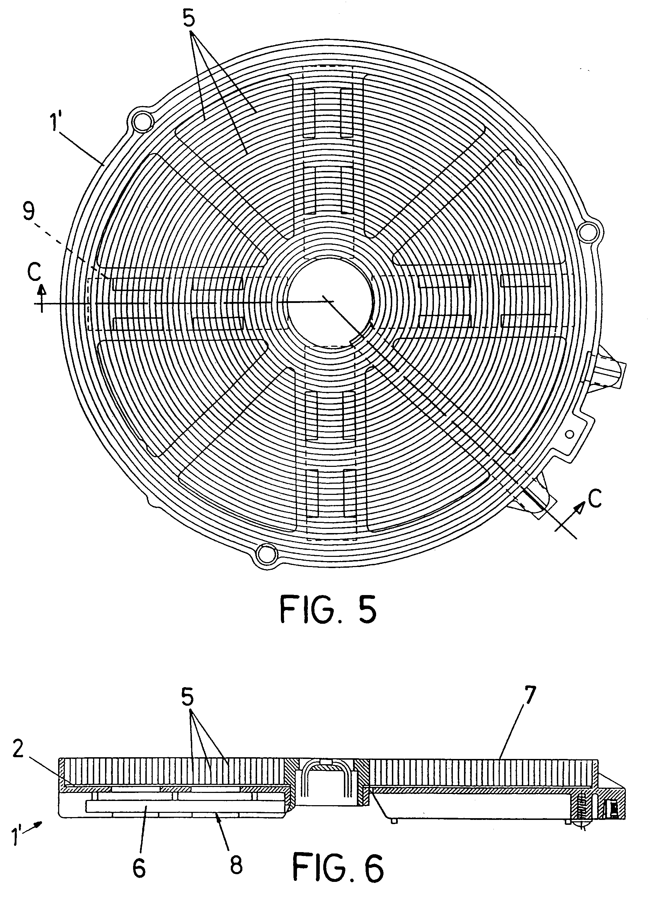

Figure 5.- It shows a plan view of the base support for a coil formed by means of a copper spiral strip.

Figure 6.- It shows a section of the support of the above figure, showing the mica plate placed on the top surface. This section corresponds to the C-C section of the above figure.

### DESCRIPTION OF A PREFERRED EMBODIMENT

In view of the cited figures and in accordance with the numbering used, we can see how the support (1) with a generally circular shape has on its top surface a grooving (2) with respective equidistant rings, in such a way that in said grooving (2) the rigid wire that will form the flat coil will be positioned in order to cause induction heating.

In order to achieve less heating of the coil by the passing of current and optimal yield, the wire is rigid and has a diameter preferably between 1 and 1.3 mm.

A mortising (3) is formed in the support (1) for the positioning of the ferrites, of which there are preferably four positioned orthogonally two by two and with their free end exceeding the diameter of the coil formed by the rigid wire.

In this way, in order to fasten the rigid wire forming the flat coil, it is not necessary to use high temperature resistant adhesives, which are not very reliable, and thus in the entire handling process of the support (1), the freeing of the wire is avoided.

In the entire industrialization process, the support (1) with the rigid wire forming the coil endures vibrations in transport, reception and assembly that could release the rigid wire. This is avoided as it remains anchored in a totally reliable manner every certain distance.

The arrangement of the rigid wire can vary and thus the coil can be shaped with its rings distributed in an irregular fashion in order to achieve a better distribution of heat, either concentrating the rings in the center of the support, outside, or in both areas leaving the interval with a smaller density of rings.

Likewise, all of the rings of the rigid wire forming the coil can be placed together, either placed on a recess with a suitable diameter in a support or between two mica plates.

Likewise, the coil can be shaped by placing a separator between the rings of the rigid wire and then putting it on a support base.

In another embodiment, the coil, in stead of being formed by a wire, will be formed by a spiral wound strip (5) placed upon a generally circular shaped support (1'), whose top surface is smooth and upon it a mica sheet (6) upon which precisely the strip (5) forming the coil rests is located. The rings of the coil are placed equidistant from each other.

A mica or Kapton sheet (7) is placed upon the top surface of said coil.

The strip (5) has a thickness of preferably 0.25 to 0.45 mm while its height is preferably between 5 and 10 mm so that said strip (5) remains located on the support (1') in a vertical position.

Some mortisings (8) are formed in the support (1') for the positioning of the ferrites (9), of which there are preferably four positioned orthogonally two by two.

Likewise, just like with the rigid wire coil the rings of the strip that form the coil, can be placed in any arrangement to achieve a better distribution of heat.

Thus, the coil can be formed with its rings distributed in an irregular manner to achieve a better distribution of heat, either concentrating them in the center of the support, outside, or in both areas leaving the interval with a smaller density of rings.

In this way, the coil defined by a spiral wound strip placed in a vertical position upon the base support (1') is useful in those cases in which the intensity that must flow through the coil is high enough, since the same is heated less, solving the problem that could arise in the case of using rigid wire, when the intensities are high, since in this case the coil is heated more and its diameter must be increased, which makes some rings closer together; by means of an electromagnetic effect some rings will induce heating of others, which could overcome the thermal insulation of the materials.

## Claims

1. Induction heating device, to be used to cook food in such a way that the heat energy is generated in the ferromagnetic container itself located on the ceramic glass upon the coil, essentially characterized because the coil is formed by a wire that is rigid with a diameter preferably between 1 and 1.3 mm, the coil remaining formed in a grooving (2) of the top surface of a support (1) with its rings equidistant, and under which there are some ferrites, in respective mortisings (3), preferably four, positioned orthogonally two by two; it being provided that distributed in a regular manner in the grooves (2) there are some U-shaped point recesses (4), with converging wings causing the anchoring of the rigid wire by pressure.

2. Induction heating device, according to claim 1, characterized because the rigid wire coil with a diameter preferably between 1 and 1.3 mm is formed by an irregular distribution of the rings, concentrating them in the center of the support, there being a smaller density of rings in the outer part.

3. Induction heating device, according to claim 1, characterized because the rigid wire coil with a diameter preferably between 1 and 1.3 mm is formed by an irregular distribution of the rings, concentrating them in the outer area of the support, there being a smaller density of rings in the center.

4. Induction heating device, according to claim 1, characterized because the rigid wire coil with a diameter preferably between 1 and 1.3 mm is formed by an irregular distribution of the rings, concentrating them in the outer part and center of the support, with a smaller density of rings in the interval area.

5. Induction heating device, according to claim 1, characterized because the rigid wire coil with a diameter preferably between 1 and 1.3 mm is formed with its rings abutted, placed upon a support or between two mica plates.

6. Induction heating device, characterized because the coil is formed by a wound strip (5), with a thickness preferably between 0.25 and 0.45 mm and a height preferably between 5 and 10 mm., remaining in a vertical position upon the smooth top surface of a base support (1') by means of a mica sheet (2), while above it there is a mica or Kapton sheet (7); it being provided for that the rings of the strip (5) are equidistant from each other or in any other arrangement, with the particularity that some mortisings (8), preferably four and arranged orthogonally two by two have been made in the bottom surface of the support (1'), for placement of the respective ferrites (9.)

7. Induction heating device, according to claim 6, characterized because the coil formed by a wound strip (5), with a thickness preferably between 0.25 and 0.45 mm and a height preferably between 5 and 10 mm, is formed by an irregular distribution of the rings, concentrating them in the center of the support, there being a smaller density of rings in the outer part.

8. Induction heating device, according to claim 6, characterized because the coil formed by a wound strip (5), with a thickness preferably between 0.25 and 0.45 mm and a height preferably between 5 and 10 mm, is formed by an irregular distribution of the rings, concentrating them in the outer area of the support, there being a smaller density of rings in the center.

9. Induction heating device, according to claim 6, characterized because the coil formed by a wound strip (5), with a thickness preferably between 0.25 and 0.45 mm and a height preferably between 5 and 10 mm, is formed by an irregular distribution of the rings, concentrating them in the outer area and center thereof, there being a smaller density of rings in the interval part.
